# EUROPEAN PATENT SPECIFICATION

(11) **EP 1 934 089 B1**
(45) Date of publication and mention of the grant of the patent: **18.02.2009**
(21) Application number: 06814173.8
(22) Date of filing: 06.09.2006
(51) Int. Cl.: B64C 1/14, B60J 1/16

(54) **MOLDED SLIDING WINDOW ASSEMBLY**
GEFORMTE SCHIEBEFENSTERANORDNUNG
ENSEMBLE FENETRE COULISSANT MOULE

(30) Priority: 07.09.2005 US 714671 P
(43) Date of publication of application: 25.06.2008
(73) Proprietor: Pilkington North America, Inc., Toledo, Ohio 43697 (US)
(72) Inventor: GILLEN, John, H., Ottawa Lake, MI 49267 (US)
(74) Representative: Pfenning, Meinig & Partner GbR
(86) International application number: PCT/US2006/034576
(87) International publication number: WO 2007/030459

(56) References cited:
- EP-A1- 0 575 780
- EP-A2- 0 968 862
- US-B1- 6 378 931
- US-B1- 6 386 617

## Description

### BACKGROUND OF INVENTION

Glass has long been the material used for windows in vehicles of many kinds. As vehicle design has evolved, larger quantities of glass have been found to be desirable. Such larger areas of glass sometimes add weight and allow larger quantities of solar energy to penetrate the windows and heat the passenger compartment of, for example, an automobile. While thinner, stronger glasses having good solar control properties have been developed, lighter, less expensive materials, allowing even greater design flexibility than glass, continue to be sought by vehicle manufacturers worldwide.

Use of plastic materials has been an area of much research and development as a replacement for glass, due to its lighter weight and the ability to mold it in very complex shapes. Many plastic materials have been found not to be nearly as durable as glass, however. Upon prolonged exposure to weather, particularly solar radiation, and to abrasive materials, such as dirt, stones and the like, many plastic materials scratch, pit, and otherwise deteriorate so that transparency is diminished, and aesthetic appearance is, generally, less appealing.

Development of improved materials which are intended to overcome many of the above-described problems continues, however. Use of thermoplastic materials, particularly polycarbonate materials, have been proposed for fixed vehicle windows. For example, U.S. Patent No. 6,378,911 discloses a fixed plastic glazing utilizing a particular type of molded locator to locate such a window in the opening of a vehicle body.

U.S. Patent No. 6,386,617 describes a removable vehicle window which can be inserted or removed from a channel/recess formed around an opening in a vehicle body. Removal/insertion of the vehicle window is accomplished via a removable panel, for example a roof panel which contains a channel/recess which assists in holding the window in place when the removable panels is affixed to the vehicle body.

It would be desirable to have a durable, cost-effective, modular thermoplastic sliding window assembly which could be readily inserted into an opening in a vehicle body.

### SUMMARY OF THE INVENTION

The modular sliding window assembly of the present invention comprises a fixed vision panel having an opening defined therein having a frame member disposed about at least a portion of the periphery of the fixed vision panel. At least one guide member is disposed on the fixed vision panel, the guide member being adapted to guide a sliding vision panel between a first position covering the opening defined by the fixed vision panel and a second position in which at least a portion of the opening is uncovered. The fixed vision panel, the frame member, and the at least one guide member are all integrally molded from a thermoplastic material and, the resulting window assembly is adapted to be installed as a modular unit in an opening in a vehicle body.

### BRIEF DESCRIPTION OF THE DRAWINGS

The above, as well as other advantages of the present invention, will become readily apparent to those skilled in the art from the following detailed description when considered in light of the accompanying drawings.

Fig. 1 is a plan view of the sliding window assembly of the present invention showing the side of such assembly as it would face the interior of a vehicle when installed in a body opening thereof.

Fig. 2 is a plan view of the sliding window assembly of the present invention as it would be viewed from the exterior of a vehicle.

Fig. 3 is a cross-sectional view taken along the line 3-3 of Fig. 1 showing the upper and lower frame members and guide members.

### DETAILED DESCRIPTION OF THE INVENTION

This invention relates to a sliding window assembly molded from a thermoplastic material. More specifically, the invention relates to a sliding window assembly for a vehicle, which assembly may be integrally molded from a polycarbonate or modified acrylic material. Exemplary polycarbonate materials include bisphenol A and tetrabromobisphenol A. Exemplary modified acrylic materials may include acrylic ester polymers such as: methyl acrylate, ethyl acrylate, propyl acrylate, isopropyl acrylate, n-butyl acrylate, isobutyl acrylate, tert-butyl acrylate, hexyl acrylate, heptyl acrylate, 2-heptyl acrylate, 2-ethylhexyl acrylate, 2-ethylbutyl acrylate, dodecyl acrylate, hexadecyl acrylate, 2-ethoxyethyl acrylate, isobornyl acrylate, cyclohexyl acrylate and copolymers of the above.

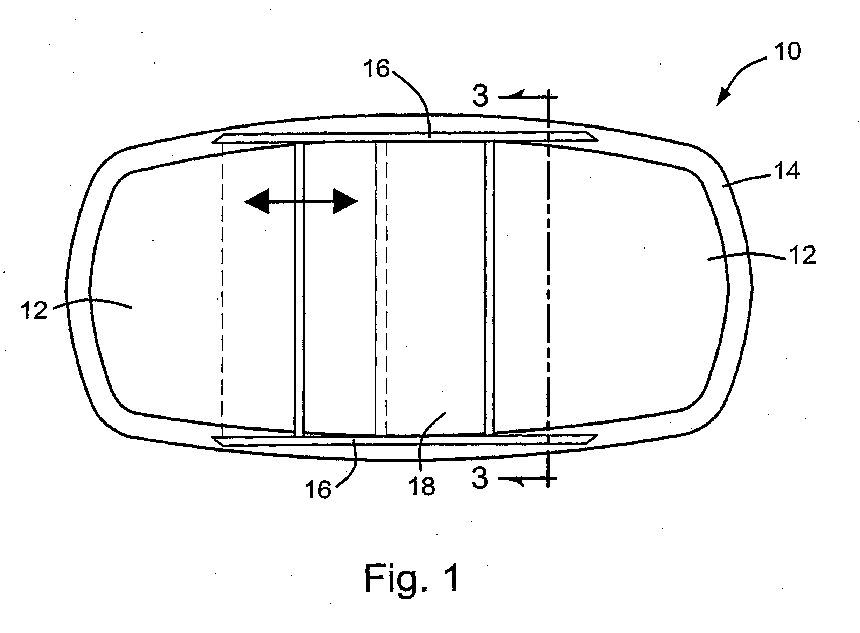

Fig. 1 shows the thermoplastic sliding window assembly 10 of the present invention. As shown, it appears that there are two fixed vision panels 12. However, in a preferred embodiment, fixed vision panels 12, frame 14 and guide members 16 are all integrally molded; that is, they are simultaneously molded as components of a single molding operation, forming an essentially one piece sliding window assembly. At this time, it is contemplated that sliding vision panel 18 will be molded separately from the other integrally molded components of the assembly and installed at a later time to provide a complete sliding window assembly.

In a preferred embodiment, a suitable adhesive material is applied to at least a portion of frame 14, or to the sheet metal around the periphery of an opening in a vehicle body, or both, at which point the sliding window assembly 10 is inserted into the body opening to fill same. The sliding window assembly 10 is thus securely adhesively bonded to the vehicle body. Other means of adhesively bonding the sliding window assembly into the vehicle body opening may be used, such as a double-sided tape, or the like.

It is also possible to mold or otherwise affix suitable attachment means to the frame 14 of the sliding window assembly 10 to assist in locating and/or supporting the window assembly 10 in the opening of the vehicle body.

Further, it is possible to integrally mold other features onto sliding window assembly 10, such as latch members, latch striker mechanisms, and the like.

It will be appreciated that in installing sliding vision panel 18, its upper and lower edges will slidingly engage with upper and lower guide members 16. The extent of the sliding motion of the sliding vision panel 18 will be governed by the configuration of guide members 16. Optionally, suitable seals and sliding enhancement means may be added to the sliding window assembly 10 in order to prevent penetration of water, air, dirt, etc., into the vehicle passenger compartment, as well as to provide for smooth operation of the sliding vision panel 10.

In a preferred embodiment, when in a fully closed position, sliding panel 16 would be flush with, i.e., in essentially the same plane as, fixed vision panel(s) 12. In a further embodiment, the sliding vision panel 18 maybe formed from a non-plastic transparent material, for example, glass.

For aesthetic purposes, it may be desirable to coat at least a portion of frame 14 with paint or other suitable pigmented material to render the frame area essentially opaque, thus hiding from view, to an observer outside the vehicle, the body sheet metal and other operational features of the window assembly 10 which are desirably not seen.

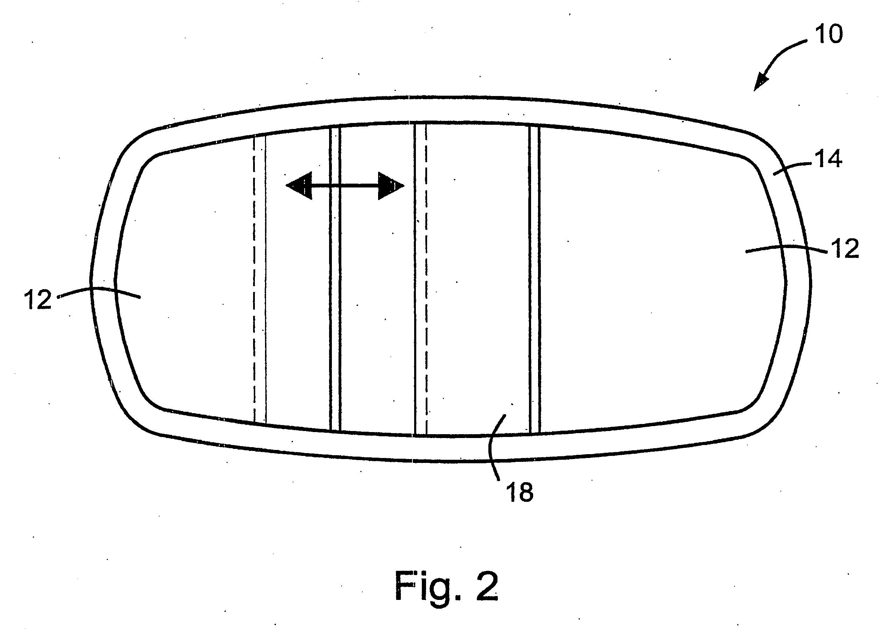

Fig. 2 shows the sliding window assembly as seen by an observer outside a vehicle. In a preferred embodiment, sliding window assembly 10 would be flush with, i.e., in essentially the same plane as, the sheet metal of the vehicle adjacent to the opening in which the sliding window assembly is installed. With such flush mounting, a clean, aesthetically pleasing appearance is achieved.

Any suitable thermoplastic may be used to form the sliding window assembly of the present invention. Examples of such thermoplastic materials include polycarbonate materials and modified acrylic materials. Any suitable molding method may be used to form the sliding window assembly of the present invention. Examples of such molding methods include various injection molding processes. Preferably, a one-step injection molding process would be used, whereby the transparent vision areas, and the non-transparent frame/trim areas would be molded in a single operation. Such a one-step molding process would require a more complex, more expensive mold, than utilizing, as an alternative, a two-step molding process, whereby the transparent vision areas would be molded in one step, and the non-transparent frame/trim areas would be molded in a distinct second molding step.

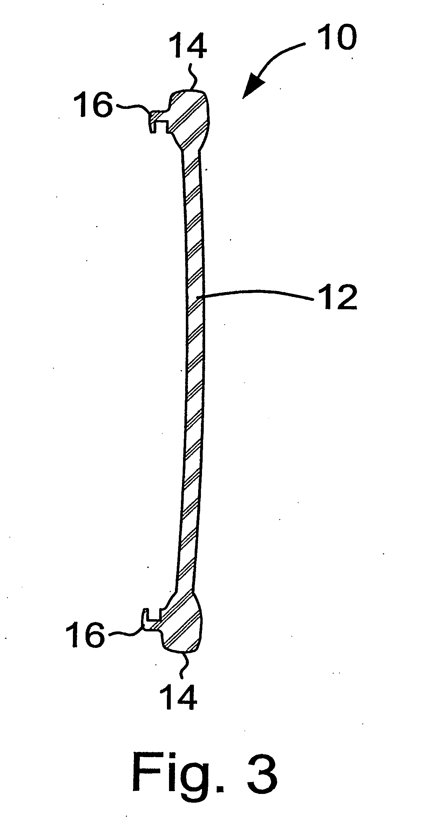

Fig. 3 shows the frame members and guide members which have been formed by for example, the above-described process such that they are all formed of the same materials. As noted, other components not shown (e.g., latches, etc.) may also be formed from like materials.

Methods of molding thermoplastic articles which may have applicability, in whole or in part, are described, for example, in U.S. Patent No. 5,339,584, 5,035,096, 6,461,704 and 6,764,638. Description of coatings to enhance hardness/ abrasion resistance, etc., set forth in the references may also be useful in connection with the present invention.

## Claims

1. A modular sliding window assembly comprising:
a fixed vision panel having an opening defined therein;
a frame member disposed about at least a portion of the periphery of the fixed vision panel; and
at least one guide member disposed on the fixed vision panel, the guide member adapted to guide a sliding vision panel between a first position covering the opening defined by the fixed vision panel and a second position in which at least a portion of the opening is uncovered;
wherein the fixed vision panel, the frame member, and the at least one guide member are integrally molded from a thermoplastic material, the resulting window assembly being adapted to be installed as a modular unit in an opening in a vehicle body.

2. The modular sliding window assembly defined in claim 1, comprising at least one sliding vision panel in engagement with the at least one guide member so as to be slideable between the first position covering the opening defined by the fixed vision panel and the second position in which at least a portion of the opening is uncovered.

3. The modular sliding window assembly defined in claim 2 wherein the sliding vision panel is comprised of a molded thermoplastic material.

4. The modular sliding window assembly defined in claim 2, wherein the at least one fixed vision panel, the at least one frame member, the at least one guide member and the at least one sliding vision panel are molded from one chosen from the group consisting of a polycarbonate material and a modified acrylic material.

5. The modular sliding window assembly defined in claim 4, wherein the at least one frame member, the at least one guide member, and the at least one sliding vision panel are molded from a polycarbonate material.

6. The modular sliding window assembly of claim 1, wherein the at least one sliding vision panel is substantially flush with the at least one fixed vision panel when the sliding vision panel completely closes the opening in the at least one fixed vision panel.

7. A modular sliding window assembly comprising:
at least one fixed vision panel having a peripheral portion with at least one opening defined therein having an upper and a lower edge defined therein;
a frame member extending around at least a portion of the peripheral portion of the fixed vision panel; and
first and second guide members disposed on the fixed vision panel and being in a parallel relationship to one another, the first guide member being positioned above the upper edge of the opening in the fixed vision panel and the second guide member being positioned below the lower edge of the opening located in the fixed vision panel with the upper and lower edges of the at least one opening such that a sliding vision panel is movable between an open and a closed position relative to the opening defined by the fixed vision panel;
wherein the fixed vision panel, the frame member, and the two guide members are integrally molded from a thermoplastic material, the resulting window assembly being adapted to be installed as a modular unit in an opening in a vehicle body.

8. The modular sliding window assembly defined in claim 7, wherein at least one molded thermoplastic sliding vision panel fills the at least one opening in the at least one fixed vision panel.

9. The modular sliding window assembly claim 7, wherein at least one glass sliding vision panel fills the at least one opening in the at least one fixed vision panel.

10. The modular sliding window assembly of claim 7, wherein the at least one fixed vision panel, the frame member, the two guide members and the at least one sliding vision panel are molded from one chosen from the group consisting of a polycarbonate material and a modified acrylic material.

11. The modular sliding window assembly defined in claim 7, wherein the at least one fixed vision panel, the frame member, the two guide members and the at least one sliding vision panel are molded from a polycarbonate material.

12. The sliding window assembly defined in claim 7, wherein at least one latch mechanism is integrally molded from a thermoplastic material simultaneously with the at least one fixed vision panel, the frame member, and the guide members.

13. A method of making a modular sliding window assembly comprising:
providing a mold having at least two mold portions;
at least one mold portion containing shaped portions coinciding with the configuration of at least one fixed vision area and at least a portion of a non-transparent frame portion of the modular sliding window assembly;
bringing the at least two mold portions into intimate, molding contact to form a mold cavity;
injecting at least two liquid thermoplastic materials into the mold in predetermined locations so that at least one liquid thermoplastic material fills the portions of the mold cavity forming the at least one transparent fixed vision area, and at least one liquid thermoplastic material fills the portions of the mold cavity forming the portion of a non-transparent frame portion of the modular sliding window assembly.

14. The method defined in claim 13, wherein the liquid thermoplastic material comprises one chosen from the group consisting of a polycarbonate material and a modified acrylic material.

15. The method defined in claim 14, wherein the liquid thermoplastic material comprises a polycarbonate material.

## Patentansprüche

1. Modulare Schiebefensteranordnung, welche aufweist:
ein festes Sichtfeld mit einer darin definierten Öffnung;
ein Rahmenteil, das um zumindest einen Teil der Peripherie des festen Sichtfelds angeordnet ist; und
zumindest ein Führungsteil, das auf dem festen Sichtfeld angeordnet ist, welches Führungsteil ausgebildet ist zum Führen eines Schiebesichtfelds zwischen einer ersten Position, in der es die von dem festen Sichtfeld definierte Öffnung abdeckt, und einer zweiten Position, in der zumindest ein Teil der Öffnung freigegeben ist;
wobei das feste Sichtfeld, das Rahmenteil und das zumindest eine Führungsteil einstückig aus einem thermoplastischen Material geformt sind und die sich ergebende Fensteranordnung ausgebildet ist, um als eine modulare Einheit in einer Öffnung eines Fahrzeugkörpers installiert zu werden.

2. Modulare Schiebefensteranordnung nach Anspruch 1,
aufweisend zumindest ein Schiebesichtfeld im Eingriff mit zumindest einem Führungsteil derart, dass es zwischen der ersten Position, in der die durch das feste Sichtfeld definierte Öffnung abgedeckt ist, und der zweiten Position, in der zumindest ein Teil der Öffnung freigegeben ist, verschiebbar ist.

3. Modulare Schiebefensteranordnung nach Anspruch 2, bei der das Schiebesichtfeld aus einem geformten thermoplastischen Material besteht.

4. Modulare Schiebefensteranordnung nach Anspruch 2, bei der das zumindest eine feste Sichtfeld, das zumindest eine Rahmenteil, das zumindest eine Führungsteil und das zumindest eine Schiebesichtfeld aus einem Material geformt sind, das aus der Gruppe bestehend aus einem Polykarbonatmaterial und einem modifizierten Acrylmaterial ausgewählt ist.

5. Modulare Schiebefensteranordnung nach Anspruch 4, bei der das zumindest eine Rahmenteil, das zumindest eine Führungsteil und das zumindest eine Schiebesichtfeld aus einem Polycarbonatmaterial geformt sind.

6. Modulare Schiebefensteranordnung nach Anspruch 1, bei der das zumindest eine Schiebesichtfeld im Wesentlichen bündig mit dem zumindest einen festen Sichtfeld ist, wenn das Schiebesichtfeld die Öffnung in dem zumindest einen festen Sichtfeld vollständig verschließt.

7. Modulare Schiebefensteranordnung, welches aufweist:
zumindest ein festes Sichtfeld mit einem peripheren Bereich mit zumindest einer darin definierten Öffnung, die eine darin definierte obere und untere Kante hat;
ein Rahmenteil, das sich um zumindest einen Teil des peripheren Bereichs des festen Sichtfelds erstreckt; und
ein erstes und ein zweites Führungsteil, die auf dem festen Sichtfeld angeordnet und in einer zueinander parallelen Beziehung sind, welches erste Führungsteil oberhalb der oberen Kante der Öffnung in dem festen Sichtfeld positioniert ist und welches zweite Führungsteil unterhalb der unteren Kante der sich in dem festen Sichtfeld befindenden Öffnung positioniert ist, mit der oberen und der unteren Kante der zumindest einen Öffnung derart, dass ein Schiebesichtfeld zwischen einer geöffneten und einer geschlossenen Position relativ zu der durch das feste Sichtfeld definierten Öffnung bewegbar ist;
wobei das feste Sichtfeld, das Rahmenteil und die beiden Führungsteile einstückig aus einem thermoplastischen Material geformt sind und die sich ergebende Fensteranordnung ausgebildet ist, um als eine modulare Einheit in einer Öffnung eines Fahrzeugkörpers installiert zu werden.

8. Modulare Schiebefensteranordnung nach Anspruch 7, bei der zumindest ein geformtes thermoplastisches Schiebesichtfeld die zumindest eine Öffnung in dem zumindest einen festen Sichtfeld ausfüllt.

9. Modulare Schiebefensteranordnung nach Anspruch 7, bei der zumindest ein Glasschiebesichtfeld die zumindest eine Öffnung in dem zumindest einen festen Sichtfeld ausfüllt.

10. Modulare Schiebefensteranordnung nach Anspruch 7, bei der das zumindest eine feste Sichtfeld, das Rahmenteil, die beiden Führungsteile und das zumindest eine Schiebesichtfeld aus einem Material geformt sind, das aus der Gruppe bestehend aus einem Polycarbonatmaterial und einem modifizierten Acrylmaterial ausgewählt ist.

11. Modulare Schiebefensteranordnung nach Anspruch 7, bei der das zumindest eine feste Sichtfeld, das Rahmenteil, die beiden Führungsteile und das zumindest eine Schiebesichtfeld aus einem Polycarbonatmaterial gebildet sind.

12. Modulare Schiebefensteranordnung nach Anspruch 7, bei der zumindest ein Verriegelungsmechanismus gleichzeitig mit dem zumindest einen festen Sichtfeld, dem Rahmenteil und den Führungsteilen einstückig aus einem thermoplastischen Material gebildet ist.

13. Verfahren zum Herstellen einer modularen Schiebefensteranordnung, welches aufweist:
Vorsehen einer Form mit zumindest zwei Formteilen;
wobei zumindest ein Formteil geformte Bereiche enthält, die mit der Konfiguration von zumindest einem festen Sichtfeld und zumindest einem Teil eines nichttransparenten Rahmenteils der modularen Schiebefensteranordnung übereinstimmen; Bringen der zumindest zwei Formteile in engen Formkontakt, um einen Formenhohlraum zu bilden; Injizieren von zumindest zwei flüssigen thermoplastischen Materialien in die Form an vorbestimmten Stellen, so dass zumindest ein flüssiges thermoplastisches Material die Bereiche des Formenhohlraums ausfüllt, die zumindest ein transparentes festes Sichtfeld bilden, und zumindest ein flüssiges thermoplastisches Material die Bereiche des Formenhohlraums ausfüllt, die den Bereich eines nichttransparenten Rahmenteils der modularen Schiebefensteranordnung bilden.

14. Verfahren nach Anspruch 13, bei dem das flüssige thermoplastische Material ein solches aufweist, das aus der Gruppe bestehend aus einem Polycarbonatmaterial und einem modifizierten Acrylmaterial ausgewählt ist.

15. Verfahren nach Anspruch 14, bei dem das flüssige thermoplastische Material ein Polycarbonatmaterial aufweist.

## Revendications

1. Ensemble formant une fenêtre coulissante modulaire, comprenant :
un panneau de vision fixe où est définie une ouverture ;
un élément formant un cadre, disposé autour d'au moins une portion de la périphérie du panneau de vision fixe ; et
au moins un élément de guidage, disposé sur le panneau de vision fixe, l'élément de guidage étant adapté pour guider un panneau coulissant de vision entre une première position couvrant l'ouverture définie par le panneau de vision fixe et une deuxième position dans laquelle au moins une partie de l'ouverture n'est pas couverte ;
dans lequel le panneau de vision fixe, l'élément formant un cadre et l'au moins un élément de guidage sont moulés d'un seul tenant à partir d'un matériau thermoplastique, l'ensemble obtenu qui forme une fenêtre étant adapté pour être installé sous forme d'unité modulaire dans une ouverture située dans une carrosserie de véhicule.

2. Ensemble formant une fenêtre coulissante modulaire selon la revendication 1, comprenant au moins un panneau coulissant de vision en engagement avec l'au moins un élément de guidage, de manière à pouvoir glisser entre la première position couvrant l'ouverture définie par le panneau de vision fixe et la deuxième position dans laquelle au moins une partie de l'ouverture est découverte.

3. Ensemble formant une fenêtre coulissante modulaire selon la revendication 2, dans lequel le panneau coulissant de vision est constitué d'un matériau thermoplastique moulé.

4. Ensemble formant une fenêtre coulissante modulaire selon la revendication 2, dans lequel l'au moins un panneau de vision fixe, l'au moins un élément formant un cadre, l'au moins un élément de guidage et l'au moins un panneau coulissant de vision sont moulés à partir d'un matériau choisi dans l'ensemble constitué d'un matériau de type polycarbonate et d'un matériau de type acrylique modifié.

5. Ensemble formant une fenêtre coulissante modulaire selon la revendication 4, dans lequel l'au moins un élément formant un cadre, l'au moins un élément de guidage et l'au moins un panneau coulissant de vision sont moulés à partir d'un matériau de type polycarbonate.

6. Ensemble formant une fenêtre coulissante modulaire selon la revendication 1, dans lequel l'au moins un panneau coulissant de vision affleure pratiquement avec l'au moins un panneau de vision fixe lorsque le panneau coulissant de vision ferme complètement l'ouverture présente dans l'au moins un panneau de vision fixe.

7. Ensemble formant une fenêtre coulissante modulaire, comprenant :
au moins un panneau de vision fixe comportant une partie périphérique dotée d'au moins une ouverture qui y est définie, comportant un bord supérieur et un bord inférieur qui y sont définis ;
un élément formant un cadre qui s'étend autour d'au moins une partie de la partie périphérique du panneau de vision fixe ; et
de premier et deuxième éléments de guidage, disposés sur le panneau de vision fixe et qui sont mutuellement parallèles, le premier élément de guidage étant positionné au-dessus du bord supérieur de l'ouverture dans le panneau de vision fixe et le deuxième élément de guidage étant positionné au-dessous du bord inférieur de l'ouverture située dans le panneau de vision fixe, les bords supérieur et inférieur de l'au moins une ouverture étant tels qu'un panneau coulissant de vision est mobile entre une position ouverte et une position fermée par rapport à l'ouverture définie par le panneau de vision fixe ;
dans lequel le panneau de vision fixe, l'élément formant un cadre et les deux éléments de guidage sont moulés d'un seul tenant à partir d'un matériau thermoplastique, l'ensemble formant une fenêtre obtenu étant conçu pour être installé sous forme d'unité modulaire dans une ouverture dans une carrosserie de véhicule.

8. Ensemble formant une fenêtre coulissante modulaire selon la revendication 7, dans lequel au moins un panneau coulissant thermoplastique moulé de vision remplit au moins une ouverture dans l'au moins un panneau de vision fixe.

9. Ensemble formant une fenêtre coulissante modulaire selon la revendication 7, dans lequel au moins un panneau coulissant en verre de vision remplit l'au moins une ouverture située dans l'au moins un panneau de vision fixe.

10. Ensemble formant une fenêtre coulissante modulaire selon la revendication 7, dans lequel l'au moins un panneau de vision fixe, l'élément formant un cadre, les deux éléments de guidage et l'au moins un panneau coulissant de vision sont moulés à partir d'un matériau choisi dans le groupe constitué d'un matériau de type polycarbonate et un matériau de type acrylique modifié.

11. Ensemble formant une fenêtre coulissante modulaire selon la revendication 7, dans lequel l'au moins un panneau de vision fixe, l'élément formant un cadre, les deux éléments de guidage et l'au moins un panneau coulissant de vision sont moulés à partir d'un matériau de type polycarbonate.

12. Ensemble formant une fenêtre coulissante selon la revendication 7, dans lequel au moins un mécanisme de verrouillage est moulé de façon intégrée à partir d'un matériau thermoplastique, simultanément avec l'au moins un panneau de vision fixe, l'élément formant un cadre et avec les éléments de guidage.

13. Procédé de fabrication d'un ensemble formant une fenêtre coulissante modulaire, comprenant :
fournir un moule comportant au moins deux parties de moulage ;
au moins une partie de moulage contenant des parties profilées coïncidant avec la configuration d'au moins une zone de vision fixe et d'au moins une partie d'une partie de cadre non transparent de l'ensemble formant une fenêtre coulissante modulaire ;
porter les au moins deux parties de moule en contact intime de moulage en formant une cavité de moulage ;
injecter au moins deux matériaux liquides thermoplastiques dans le moule dans des emplacements prédéterminés, afin qu'au moins un matériau liquide thermoplastique remplisse les parties de la cavité de moulage en formant l'au moins une zone de vision fixe transparente, et que l'au moins un matériau liquide thermoplastique remplisse les parties de la cavité de moulage en formant la partie d'une partie de cadre non transparent de l'ensemble formant une fenêtre coulissante modulaire.

14. Procédé selon la revendication 13, dans lequel le matériau liquide thermoplastique comprend un matériau choisi dans l'ensemble constitué d'un matériau de type polycarbonate et un matériau de type acrylique modifié.

15. Procédé selon la revendication 14, dans lequel le matériau liquide thermoplastique comprend un matériau de type polycarbonate.
